# EUROPEAN PATENT APPLICATION

(11) **EP 4 744 498 A1**
(43) Date of publication of application: **20.05.2026**
(21) Application number: 24213362.7
(22) Date of filing: 15.11.2024
(51) Int. Cl.: A23G 1/30, A23G 1/32, A23G 1/36, A23G 1/40, A23G 1/48, A23G 1/00

(54) **A CHOCOLATE ANALOGUE**

(71) Applicant: Tirlán Limited, Kilkenny Co. R95 DXR1 (IE)
(72) Inventor: O'Coinceanainn, Mairtin, Kilkenny, R95 DXR1 (IE); Naghshineh, Mahsa, Kilkenny, R95 DXR1 (IE); Walsh, Katriona, Kilkenny, R95 DXR1 (IE)
(74) Representative: FRKelly

(57) **Abstract**

The present invention relates to chocolate analogues. Specifically, the present invention relates to non-dairy and/or plant-based chocolate analogues that are suitable for consumption by a vegan consumer. Also disclosed are methods of producing such a chocolate analogue.

## Description

### Field of the invention

The present invention relates to chocolate analogues. Specifically, the present invention relates to non-dairy and/or plant-based chocolate analogues that are suitable for consumption by a vegan consumer. Also disclosed are methods of producing such a chocolate analogue.

### Background to the invention

Chocolate is one of the most popular food types and flavours in the world.

Much of the traditional chocolate consumed today is typically made from cocoa (solids from roasted and ground cocoa beans), fat (such as cocoa butter) and a sweetener (such as powdered sugar) to produce confectionery products for consumption by consumers. There are several types of chocolate, classified primarily according to the proportion of cocoa and fat content used in a particular formulation.

To produce traditional chocolate for consumption, the seeds of the cacao tree (*Theobroma cacao*) are fermented to develop flavour. After fermentation, the seeds are dried, cleaned, and roasted. The shell is removed to produce nibs, which are then ground to cocoa mass. Once the cocoa mass is liquefied by heating, it is called chocolate liquor. The liquor may be cooled and processed into its two components: cocoa solids and cocoa butter.

The traditional types of chocolate are dark, milk and white. All of these types of chocolate contain cocoa butter, which is the ingredient defining the physical properties (such as consistency and melting temperature) of chocolate. Plain (or dark) chocolate is a form of chocolate that is similar to pure cocoa liquor, although is typically made with a higher proportion of cocoa butter, and is simply defined by cocoa percentage. In milk chocolate, the non-fat cocoa solids are partly or mostly replaced by milk solids. In white chocolate, the non-fat cocoa solids are all replaced by milk solids.

The milk solids (such as from dairy milk, dairy milk derivatives, and/or butterfat) used in traditional types of chocolate are not suitable consumption by a vegan consumer.

The demand for vegan products has risen sharply in recent years and the rise is expected to continue as consumers reduce consumption of foods of animal origin. The global vegan chocolate market is expected to be worth USD 2 billion by 2032.

There is a need to provide a non-dairy and/or plant-based chocolate analogue that is suitable for consumption by a vegan consumer, and which achieves comparable taste sensation, texture, and mouthfeel compared to traditional chocolate, and avoids processing issues that can arise due to viscosity of analogue ingredients.

### Summary of the invention

According to a first aspect of the present invention, there is provided a chocolate analogue comprising:
(a) a flour,
(b) cocoa, and
(c) a fat.

Optionally, the chocolate analogue further comprises a sweetener.

Optionally, the chocolate analogue comprises:
(a) a flour,
(b) cocoa,
(c) a fat, and
(d) a sweetener.

Optionally, the chocolate analogue further comprises an emulsifier.

Optionally, the chocolate analogue comprises:
(a) a flour,
(b) cocoa,
(c) a fat, and
(d) an emulsifier.

Optionally, the chocolate analogue comprises:
(a) a flour,
(b) cocoa,
(c) a fat,
(d) a sweetener, and
(e) an emulsifier.

Preferably, the chocolate analogue comprises:
(a) a flour,
(b) cocoa,
(c) a fat,
(d) a sweetener, and
(e) an emulsifier.

Optionally, the flour is a ground flour.

Optionally or additionally, the flour is a milled flour.

Optionally or additionally, the flour is a roller milled flour.

Optionally or additionally, the flour is a purified flour.

Optionally or additionally, the flour is a sifted flour.

Optionally or additionally, the flour is a mechanically separated flour.

Optionally or additionally, the flour is a screened flour.

Optionally or additionally, the flour is a fluid classified flour.

Optionally or additionally, the flour is a gas classified flour.

Optionally or additionally, the flour is an air classified flour.

Optionally, the flour has a particle size of less than 600 µm.

Optionally, the flour has a particle size of less than 600, optionally less than 550, optionally less than 500, optionally less than 450, optionally less than 400, optionally less than 350, optionally less than 300, optionally less than 250, optionally less than 200, optionally less than 100, optionally less than 50 µm.

Optionally, the flour has a particle size of less than 600, optionally less than 550, optionally less than 540, optionally less than 530, optionally less than 520, optionally less than 510, optionally less than 500, optionally less than 490, optionally less than 480, optionally less than 470, optionally less than 460, optionally less than 450, optionally less than 440, optionally less than 430, optionally less than 420, optionally less than 410, optionally less than 400, optionally less than 390, optionally less than 380, optionally less than 370, optionally less than 360, optionally less than 350, optionally less than 340, optionally less than 330, optionally less than 320, optionally less than 310, optionally less than 300, optionally less than 290, optionally less than 280, optionally less than 270, optionally less than 260, optionally less than 250, optionally less than 200, optionally less than 150, optionally less than 100, optionally less than 50 µm.

Preferably, the flour has a particle size of less than 550 µm.

Further preferably, the flour has a particle size of less than 270 µm.

Optionally, the flour has an average particle size of less than 600 µm.

Optionally, the flour has an average particle size of less than 600, optionally less than 550, optionally less than 500, optionally less than 450, optionally less than 400, optionally less than 350, optionally less than 300, optionally less than 250, optionally less than 200, optionally less than 100, optionally less than 50 µm.

Optionally, the flour has an average particle size of less than 600, optionally less than 550, optionally less than 540, optionally less than 530, optionally less than 520, optionally less than 510, optionally less than 500, optionally less than 490, optionally less than 480, optionally less than 470, optionally less than 460, optionally less than 450, optionally less than 440, optionally less than 430, optionally less than 420, optionally less than 410, optionally less than 400, optionally less than 390, optionally less than 380, optionally less than 370, optionally less than 360, optionally less than 350, optionally less than 340, optionally less than 330, optionally less than 320, optionally less than 310, optionally less than 300, optionally less than 290, optionally less than 280, optionally less than 270, optionally less than 260, optionally less than 250, optionally less than 200, optionally less than 150, optionally less than 100, optionally less than 50 µm.

Preferably, the flour has an average particle size of less than 550 µm.

Further preferably, the flour has an average particle size of less than 270 µm.

Optionally, the flour has a particle size distribution of less than 600 µm.

Optionally, the flour has a particle size distribution of less than 600, optionally less than 550, optionally less than 500, optionally less than 450, optionally less than 400, optionally less than 350, optionally less than 300, optionally less than 250, optionally less than 200, optionally less than 100, optionally less than 50 µm.

Optionally, the flour has a particle size distribution of less than 600, optionally less than 550, optionally less than 540, optionally less than 530, optionally less than 520, optionally less than 510, optionally less than 500, optionally less than 490, optionally less than 480, optionally less than 470, optionally less than 460, optionally less than 450, optionally less than 440, optionally less than 430, optionally less than 420, optionally less than 410, optionally less than 400, optionally less than 390, optionally less than 380, optionally less than 370, optionally less than 360, optionally less than 350, optionally less than 340, optionally less than 330, optionally less than 320, optionally less than 310, optionally less than 300, optionally less than 290, optionally less than 280, optionally less than 270, optionally less than 260, optionally less than 250, optionally less than 200, optionally less than 150, optionally less than 100, optionally less than 50 µm.

Preferably, the flour has a particle size distribution of less than 550 µm.

Further preferably, the flour has a particle size distribution of less than 270 µm.

Optionally, the flour has a particle size distribution of 50 - 600 µm.

Optionally, the flour has a particle size distribution of 50 - 600, optionally 100 - 550, optionally 150 - 500, optionally 200 - 450, optionally 250 - 400, optionally 300 - 350 µm.

Optionally, the flour has a particle size distribution of 50 - 600, optionally 100 - 550, optionally 150 - 500, optionally 200 - 450, optionally 210 - 440, optionally 220 - 420, optionally 230 - 410, optionally 240 - 400, optionally 250 - 390, optionally 260 - 380, optionally 270 - 370, optionally 280 - 360, optionally 290 - 350, optionally 300 - 340, optionally 310 - 330 µm.

Preferably, the flour has a particle size distribution of 100 - 550 µm.

Further preferably, the flour has a particle size distribution of 270 - 370 µm.

Optionally, at least 50% of the flour has a particle size distribution of less than 600 µm, optionally on a v/v basis.

Optionally, at least 50% of the flour has a particle size distribution of less than 600, optionally less than 550, optionally less than 500, optionally less than 450, optionally less than 400, optionally less than 350, optionally less than 300, optionally less than 250, optionally less than 200, optionally less than 100, optionally less than 50 µm, optionally on a v/v basis.

Optionally, at least 50% of the flour has a particle size distribution of less than 600, optionally less than 550, optionally less than 540, optionally less than 530, optionally less than 520, optionally less than 510, optionally less than 500, optionally less than 490, optionally less than 480, optionally less than 470, optionally less than 460, optionally less than 450, optionally less than 440, optionally less than 430, optionally less than 420, optionally less than 410, optionally less than 400, optionally less than 390, optionally less than 380, optionally less than 370, optionally less than 360, optionally less than 350, optionally less than 340, optionally less than 330, optionally less than 320, optionally less than 310, optionally less than 300, optionally less than 290, optionally less than 280, optionally less than 270, optionally less than 260, optionally less than 250, optionally less than 200, optionally less than 150, optionally less than 100, optionally less than 50 µm, optionally on a v/v basis.

Preferably, at least 50% of the flour has a particle size distribution of less than 550 µm, optionally on a v/v basis.

Further preferably, at least 50% of the flour has a particle size distribution of less than 270 µm, optionally on a v/v basis.

Optionally, at least 50% of the flour has a particle size distribution of 50 - 600 µm, optionally on a v/v basis.

Optionally, at least 50% of the flour has a particle size distribution of 50 - 600, optionally 100 - 550, optionally 150 - 500, optionally 200 - 450, optionally 250 - 400, optionally 300 - 350 µm, optionally on a v/v basis.

Optionally, at least 50% of the flour has a particle size distribution of 50 - 600, optionally 100 - 550, optionally 150 - 500, optionally 200 - 450, optionally 210 - 440, optionally 220 - 420, optionally 230 - 410, optionally 240 - 400, optionally 250 - 390, optionally 260 - 380, optionally 270 - 370, optionally 280 - 360, optionally 290 - 350, optionally 300 - 340, optionally 310 - 330 µm, optionally on a v/v basis.

Preferably, at least 50% of the flour has a particle size distribution of 100 - 550 µm, optionally on a v/v basis.

Further preferably, at least 50% of the flour has a particle size distribution of 270 - 370 µm, optionally on a v/v basis.

Optionally, at least 90% of the flour has a particle size distribution of less than 600 µm, optionally on a v/v basis.

Optionally, at least 90% of the flour has a particle size distribution of less than 600, optionally less than 550, optionally less than 500, optionally less than 450, optionally less than 400, optionally less than 350, optionally less than 300, optionally less than 250, optionally less than 200, optionally less than 100, optionally less than 50 µm, optionally on a v/v basis.

Optionally, at least 90% of the flour has a particle size distribution of less than 600, optionally less than 550, optionally less than 540, optionally less than 530, optionally less than 520, optionally less than 510, optionally less than 500, optionally less than 490, optionally less than 480, optionally less than 470, optionally less than 460, optionally less than 450, optionally less than 440, optionally less than 430, optionally less than 420, optionally less than 410, optionally less than 400, optionally less than 390, optionally less than 380, optionally less than 370, optionally less than 360, optionally less than 350, optionally less than 340, optionally less than 330, optionally less than 320, optionally less than 310, optionally less than 300, optionally less than 290, optionally less than 280, optionally less than 270, optionally less than 260, optionally less than 250, optionally less than 200, optionally less than 150, optionally less than 100, optionally less than 50 µm, optionally on a v/v basis.

Preferably, at least 90% of the flour has a particle size distribution of less than 550 µm, optionally on a v/v basis.

Further preferably, at least 90% of the flour has a particle size distribution of less than 270 µm, optionally on a v/v basis.

Optionally, at least 90% of the flour has a particle size distribution of 50 - 600 µm, optionally on a v/v basis.

Optionally, at least 90% of the flour has a particle size distribution of 50 - 600, optionally 100 - 550, optionally 150 - 500, optionally 200 - 450, optionally 250 - 400, optionally 300 - 350 µm, optionally on a v/v basis.

Optionally, at least 90% of the flour has a particle size distribution of 50 - 600, optionally 100 - 550, optionally 150 - 500, optionally 200 - 450, optionally 210 - 440, optionally 220 - 420, optionally 230 - 410, optionally 240 - 400, optionally 250 - 390, optionally 260 - 380, optionally 270 - 370, optionally 280 - 360, optionally 290 - 350, optionally 300 - 340, optionally 310 - 330 µm, optionally on a v/v basis.

Preferably, at least 90% of the flour has a particle size distribution of 100 - 550 µm, optionally on a v/v basis.

Further preferably, at least 90% of the flour has a particle size distribution of 270 - 370 µm, optionally on a v/v basis.

Optionally, at least 99% of the flour has a particle size distribution of less than 600 µm, optionally on a v/v basis.

Optionally, at least 99% of the flour has a particle size distribution of less than 600, optionally less than 550, optionally less than 500, optionally less than 450, optionally less than 400, optionally less than 350, optionally less than 300, optionally less than 250, optionally less than 200, optionally less than 100, optionally less than 50 µm, optionally on a v/v basis.

Optionally, at least 99% of the flour has a particle size distribution of less than 600, optionally less than 550, optionally less than 540, optionally less than 530, optionally less than 520, optionally less than 510, optionally less than 500, optionally less than 490, optionally less than 480, optionally less than 470, optionally less than 460, optionally less than 450, optionally less than 440, optionally less than 430, optionally less than 420, optionally less than 410, optionally less than 400, optionally less than 390, optionally less than 380, optionally less than 370, optionally less than 360, optionally less than 350, optionally less than 340, optionally less than 330, optionally less than 320, optionally less than 310, optionally less than 300, optionally less than 290, optionally less than 280, optionally less than 270, optionally less than 260, optionally less than 250, optionally less than 200, optionally less than 150, optionally less than 100, optionally less than 50 µm, optionally on a v/v basis.

Preferably, at least 99% of the flour has a particle size distribution of less than 550 µm, optionally on a v/v basis.

Further preferably, at least 99% of the flour has a particle size distribution of less than 270 µm, optionally on a v/v basis.

Optionally, at least 99% of the flour has a particle size distribution of 50 - 600 µm, optionally on a v/v basis.

Optionally, at least 99% of the flour has a particle size distribution of 50 - 600, optionally 100 - 550, optionally 150 - 500, optionally 200 - 450, optionally 250 - 400, optionally 300 - 350 µm, optionally on a v/v basis.

Optionally, at least 99% of the flour has a particle size distribution of 50 - 600, optionally 100 - 550, optionally 150 - 500, optionally 200 - 450, optionally 210 - 440, optionally 220 - 420, optionally 230 - 410, optionally 240 - 400, optionally 250 - 390, optionally 260 - 380, optionally 270 - 370, optionally 280 - 360, optionally 290 - 350, optionally 300 - 340, optionally 310 - 330 µm, optionally on a v/v basis.

Preferably, at least 99% of the flour has a particle size distribution of 100 - 550 µm, optionally on a v/v basis.

Further preferably, at least 99% of the flour has a particle size distribution of 270 - 370 µm, optionally on a v/v basis.

Optionally, 50% of the flour has a particle size of less than 90 µm.

Optionally, 50% of the flour has a particle size of less than 90, optionally less than 85, optionally less than 80, optionally less than 75, optionally less than 70, optionally less than 65, optionally less than 60, optionally less than 55, optionally less than 50, optionally less than 45, optionally less than 40, optionally less than 35, optionally less than 30, optionally less than 25, optionally less than 20, optionally less than 15, optionally less than 10 µm.

Preferably, 50% of the flour has a particle size of less than 80 µm.

Further preferably, 50% of the flour has a particle size of less than 50 µm.

Preferably, the chocolate analogue comprises:
(a) a flour, wherein 50% of the flour has a particle size of less than 50 µm,
(b) cocoa,
(c) a fat,
(d) a sweetener, and
(e) an emulsifier.

Optionally, the particle size is measured using a technique selected from dynamic light scattering (DLS), static light scattering, laser diffraction (LD), near-infrared reflectance spectroscopy, sedimentation, microscopy, and sieve analysis.

Optionally, the particle size is measured using a dry technique selected from dynamic light scattering (DLS), static light scattering, laser diffraction (LD), near-infrared reflectance spectroscopy, sedimentation, microscopy, and sieve analysis.

Optionally, the particle size is measured using a wet technique selected from dynamic light scattering (DLS), static light scattering, laser diffraction (LD), near-infrared reflectance spectroscopy, sedimentation, microscopy, and sieve analysis.

Optionally, the particle size is measured using a wet technique using water, ethanol, isopropanol, or octane as solvent.

Preferably, the particle size is measured using laser diffraction (LD).

Optionally, the particle size is measured using laser diffraction (LD) having an active beam length of 2.4 mm.

Optionally, the particle size is measured using laser diffraction (LD) having an absorbance is in the range 12 - 16 %.

Optionally, the particle size is measured using the Fraunhofer diffraction theory of light scattering.

Optionally, the particle size is measured using the Mie theory of light scattering.

Preferably, the particle size is measured using the Mie theory of light scattering.

Optionally, the particle size is measured as an equivalent sphere diameter.

Optionally, the particle size is measured as a volume equivalent sphere diameter.

Preferably, the particle size is measured as a volume equivalent sphere diameter.

Optionally, the flour is a legume flour.

Optionally, the flour is a bean, chickpea, peanut, lentil, or lupin flour.

Optionally, the flour is a cassava or tapioca flour.

Optionally, the flour is a nut flour.

Optionally, the flour is an acorn, almond, chestnut, coconut, hazelnut, or peanut flour.

Optionally, the flour is a grain flour.

Optionally, the flour is a cereal flour.

Optionally, the flour is a rice (optionally brown or white), wheat (optionally spelt), rye, oat, barley, millet, or maize flour.

Preferably, the flour is an oat flour.

Optionally, the flour is a whole-grain flour.

Optionally, the flour is a whole-grain flour comprising at least one of the endosperm, germ, and bran of the cereal.

Optionally, the flour is a refined flour.

Optionally, the flour is a refined flour comprising the endosperm of the cereal.

Optionally, the flour is a refined flour consisting of the endosperm of the cereal.

Preferably, the chocolate analogue comprises:
(a) an oat flour, wherein 50% of the flour has a particle size of less than 50 µm,
(b) cocoa,
(c) a fat,
(d) a sweetener, and
(e) an emulsifier.

Optionally, the flour is a hydrolysed grain flour.

Optionally, the flour is a hydrolysed cereal flour.

Optionally, the flour is a hydrolysed rice, wheat, rye, oat, barley, millet, or maize flour.

Optionally, the flour has substantially no starch.

Optionally, the flour has less than 60 % starch on a dry basis.

Optionally, the flour has less than 60, optionally less than 50, optionally less than 40, optionally less than 30, optionally less than 20, optionally less than 10, optionally less than 5, optionally less than 4, optionally less than 3, optionally less than 2, optionally less than 1 % starch on a dry basis.

Optionally, the flour is an unhydrolysed grain flour.

Optionally, the flour is an unhydrolysed cereal flour.

Optionally, the flour is an unhydrolysed rice, wheat, rye, oat, barley, millet, or maize flour.

Preferably, the flour is an unhydrolysed oat flour.

Preferably, the chocolate analogue comprises:
(a) an unhydrolysed oat flour, wherein 50% of the flour has a particle size of less than 50 µm,
(b) cocoa,
(c) a fat,
(d) a sweetener, and
(e) an emulsifier.

Optionally, the chocolate analogue comprises the flour in an amount of at least 1 %(w/w) relative to the weight of the chocolate analogue.

Optionally, the chocolate analogue comprises the flour in an amount of at least 1, optionally at least 2, optionally at least 4, optionally at least 6, optionally at least 8, optionally at least 10, optionally at least 12, optionally at least 14, optionally at least 16, optionally at least 18, optionally at least 20, optionally at least 22, optionally at least 24, optionally at least 26, optionally at least 28, optionally at least 30 %(w/w) relative to the weight of the chocolate analogue.

Optionally, the chocolate analogue comprises the flour in an amount of about 1 - 30, optionally about 2 - 28, optionally about 4 - 26, optionally about 6 - 24, optionally about 8 - 22, optionally about 10 - 20, optionally about 12 - 18, optionally about 14 - 16 %(w/w) relative to the weight of the chocolate analogue.

Preferably, the chocolate analogue comprises the flour in an amount of about 10 - 20 %(w/w) relative to the weight of the chocolate analogue.

Preferably, the chocolate analogue comprises the flour in an amount of about 10 %(w/w) relative to the weight of the chocolate analogue.

Preferably, the chocolate analogue comprises:
(a) an unhydrolysed oat flour, wherein 50% of the flour has a particle size of less than 50 µm in an amount of about 10 %(w/w) relative to the weight of the chocolate analogue,
(b) cocoa,
(c) a fat,
(d) a sweetener, and
(e) an emulsifier.

Optionally, the cocoa is a cocoa liquor.

Optionally, the cocoa is a cocoa mass.

Optionally, the chocolate analogue comprises the cocoa in an amount of at least 2 %(w/w) relative to the weight of the chocolate analogue.

Optionally, the chocolate analogue comprises the cocoa in an amount of at least 2, optionally at least 4, optionally at least 6, optionally at least 8, optionally at least 10, optionally at least 12, optionally at least 14, optionally at least 16, optionally at least 18, optionally at least 20 %(w/w) relative to the weight of the chocolate analogue.

Optionally, the chocolate analogue comprises the cocoa in an amount of 2 - 20, optionally 4-18, optionally 6 - 16, optionally 8 - 14, optionally 10 - 12 %(w/w) relative to the weight of the chocolate analogue.

Preferably, the chocolate analogue comprises the cocoa in an amount of about 2 %(w/w) relative to the weight of the chocolate analogue.

Preferably, the chocolate analogue comprises:
(a) an unhydrolysed oat flour, wherein 50% of the flour has a particle size of less than 50 µm in an amount of about 10 %(w/w) relative to the weight of the chocolate analogue,
(b) cocoa in an amount of about 2 %(w/w) relative to the weight of the chocolate analogue,
(c) a fat,
(d) a sweetener, and
(e) an emulsifier.

Optionally, the cocoa comprises non-fat cocoa solids.

Optionally, the cocoa is non-fat cocoa solids.

Preferably, the chocolate analogue comprises:
(f) an unhydrolysed oat flour, wherein 50% of the flour has a particle size of less than 50 µm in an amount of about 10 %(w/w) relative to the weight of the chocolate analogue,
(g) non-fat cocoa solids,
(h) a fat,
(i) a sweetener, and
(j) an emulsifier.

Optionally, the chocolate analogue comprises non-fat cocoa solids in an amount of at least 2 %(w/w) relative to the weight of the chocolate analogue.

Optionally, the chocolate analogue comprises non-fat cocoa solids in an amount of at least 2, optionally at least 4, optionally at least 6, optionally at least 8, optionally at least 10, optionally at least 12, optionally at least 14, optionally at least 16, optionally at least 18, optionally at least 20 %(w/w) relative to the weight of the chocolate analogue.

Optionally, the chocolate analogue comprises non-fat cocoa solids in an amount of 2 - 20, optionally 4 - 18, optionally 6 - 16, optionally 8 - 14, optionally 10 - 12 %(w/w) relative to the weight of the chocolate analogue.

Preferably, the chocolate analogue comprises non-fat cocoa solids in an amount of about 2 %(w/w) relative to the weight of the chocolate analogue.

Preferably, the chocolate analogue comprises:
(a) an unhydrolysed oat flour, wherein 50% of the flour has a particle size of less than 50 µm in an amount of about 10 %(w/w) relative to the weight of the chocolate analogue,
(b) non-fat cocoa solids in an amount of about 2 %(w/w) relative to the weight of the chocolate analogue,
(c) a fat,
(d) a sweetener, and
(e) an emulsifier.

Optionally, the chocolate analogue comprises the fat in an amount of at least 20 %(w/w) relative to the weight of the chocolate analogue.

Optionally, the chocolate analogue comprises the fat in an amount of at least 20, optionally at least 25, optionally at least 30, optionally at least 35, optionally at least 40, optionally at least 45, optionally at least 50, optionally at least 55, optionally at least 60 %(w/w) relative to the weight of the chocolate analogue.

Optionally, the chocolate analogue comprises the fat in an amount of 20 - 60, optionally 25 - 55, optionally 30 - 50, optionally 35 - 45, optionally 40 %(w/w) relative to the weight of the chocolate analogue.

Preferably, the chocolate analogue comprises the fat in an amount of about 40 %(w/w) relative to the weight of the chocolate analogue.

Preferably, the chocolate analogue comprises:
(a) an unhydrolysed oat flour, wherein 50% of the flour has a particle size of less than 50 µm in an amount of about 10 %(w/w) relative to the weight of the chocolate analogue,
(b) non-fat cocoa solids in an amount of about 2 %(w/w) relative to the weight of the chocolate analogue,
(c) a fat in an amount of about 40 %(w/w) relative to the weight of the chocolate analogue,
(d) a sweetener, and
(e) an emulsifier.

Optionally, the fat is a plant fat.

Optionally, the fat is a vegetable fat.

Optionally, the fat is an oil.

Optionally, the fat is a vegetable oil.

Optionally, the fat is a palm, soybean, rapeseed (optionally canola), sunflower seed, peanut, cottonseed, palm kernel, coconut, or olive fat.

Optionally, the fat is a palm, soybean, rapeseed (optionally canola), sunflower seed, peanut, cottonseed, palm kernel, coconut, or olive oil.

Optionally, the fat is cocoa butter.

Optionally, the chocolate analogue comprises cocoa butter in an amount of at least 20 %(w/w) relative to the weight of the chocolate analogue.

Optionally, the chocolate analogue comprises cocoa butter in an amount of at least 20, optionally at least 25, optionally at least 30, optionally at least 35, optionally at least 40, optionally at least 45, optionally at least 50, optionally at least 55, optionally at least 60 %(w/w) relative to the weight of the chocolate analogue.

Optionally, the chocolate analogue comprises cocoa butter in an amount of 20 - 60, optionally 25 - 55, optionally 30 - 50, optionally 35 - 45, optionally 40 %(w/w) relative to the weight of the chocolate analogue.

Preferably, the chocolate analogue comprises cocoa butter in an amount of about 40 %(w/w) relative to the weight of the chocolate analogue.

Preferably, the chocolate analogue comprises:
(a) an unhydrolysed oat flour, wherein 50% of the flour has a particle size of less than 50 µm in an amount of about 10 %(w/w) relative to the weight of the chocolate analogue,
(b) non-fat cocoa solids in an amount of about 2 %(w/w) relative to the weight of the chocolate analogue,
(c) cocoa butter in an amount of about 40 %(w/w) relative to the weight of the chocolate analogue,
(d) a sweetener, and
(e) an emulsifier.

Optionally, the sweetener is selected from brazzein, curculin, fructooligosaccharide, glycyrrhizin, hydrogenated starch hydrolysates, inulin, isomaltooligosaccharide, isomaltulose, mogroside mix, mabinlin, maltodextrin, miraculin, monatin, monellin, osladin, pentadin, polydextrose, psicose, sugar alcohol, stevia, tagatose, and xylitol.

Optionally, the sweetener is selected from acesulfame potassium, advantame, alitame, aspartame, salt of aspartame-acesulfame, carrelame, sodium cyclamate, dulcin, glucin, lugduname, neohesperidin dihydrochalcone, neotame, P-4000, saccharin, and sucralose.

Optionally, the sweetener is selected from arabitol, erythritol, glycerol, HSH, isomalt, lactitol, maltitol, mannitol, sorbitol, and xylitol.

Optionally, the sweetener is a sugar.

Optionally, the sugar is an apple, apricot, banana, fig, grape, orange, peach, pear, pineapple, plum, strawberry, beet (optionally red beet), carrot, corn (optionally sweetcorn), red pepper (optionally sweet red pepper), onion (optionally sweet onion), sweet potato, yam, sugar cane, or sugar beet sugar.

Optionally, the sweetener is a disaccharide sugar.

Optionally, the sweetener is a sugar selected from at least one of sucrose, lactose, and maltose.

Optionally, the sweetener is a sucrose.

Optionally, the sweetener is a refined sugar.

Optionally, the sweetener is a refined disaccharide sugar.

Optionally, the sweetener is a refined sucrose.

Preferably, the chocolate analogue comprises:
(a) an unhydrolysed oat flour, wherein 50% of the flour has a particle size of less than 50 µm in an amount of about 10 %(w/w) relative to the weight of the chocolate analogue,
(b) non-fat cocoa solids in an amount of about 2 %(w/w) relative to the weight of the chocolate analogue,
(c) cocoa butter in an amount of about 40 %(w/w) relative to the weight of the chocolate analogue,
(d) a refined sucrose, and
(e) an emulsifier.

Optionally, the chocolate analogue comprises the sweetener in an amount of at least 25 %(w/w) relative to the weight of the chocolate analogue.

Optionally, the chocolate analogue comprises the sweetener in an amount of at least 25, optionally at least 30, optionally at least 35, optionally at least 40, optionally at least 45, optionally at least 50, optionally at least 55, optionally at least 60 %(w/w) relative to the weight of the chocolate analogue.

Optionally, the chocolate analogue comprises the sweetener in an amount of 25 - 60, optionally 30 - 55, optionally 35 - 50, optionally 40 - 45 %(w/w) relative to the weight of the chocolate analogue.

Preferably, the chocolate analogue comprises the sweetener in an amount of about 45 %(w/w) relative to the weight of the chocolate analogue.

Preferably, the chocolate analogue comprises:
(a) an unhydrolysed oat flour, wherein 50% of the flour has a particle size of less than 50 µm in an amount of about 10 %(w/w) relative to the weight of the chocolate analogue,
(b) non-fat cocoa solids in an amount of about 2 %(w/w) relative to the weight of the chocolate analogue,
(c) cocoa butter in an amount of about 40 %(w/w) relative to the weight of the chocolate analogue,
(d) the sweetener in an amount of about 45 %(w/w) relative to the weight of the chocolate analogue, and
(e) an emulsifier.

Optionally, the chocolate analogue comprises refined sucrose in an amount of at least 25 %(w/w) relative to the weight of the chocolate analogue.

Optionally, the chocolate analogue comprises refined sucrose in an amount of at least 25, optionally at least 30, optionally at least 35, optionally at least 40, optionally at least 45, optionally at least 50, optionally at least 55, optionally at least 60 %(w/w) relative to the weight of the chocolate analogue.

Optionally, the chocolate analogue comprises refined sucrose in an amount of 25 - 60, optionally 30 - 55, optionally 35 - 50, optionally 40 - 45 %(w/w) relative to the weight of the chocolate analogue.

Preferably, the chocolate analogue comprises refined sucrose in an amount of about 45 %(w/w) relative to the weight of the chocolate analogue.

Preferably, the chocolate analogue comprises:
(a) an unhydrolysed oat flour, wherein 50% of the flour has a particle size of less than 50 µm in an amount of about 10 %(w/w) relative to the weight of the chocolate analogue,
(b) non-fat cocoa solids in an amount of about 2 %(w/w) relative to the weight of the chocolate analogue,
(c) cocoa butter in an amount of about 40 %(w/w) relative to the weight of the chocolate analogue,
(d) refined sucrose in an amount of about 45 %(w/w) relative to the weight of the chocolate analogue, and
(e) an emulsifier.

Optionally, the emulsifier is a lecithin.

Optionally, the emulsifier is a plant lecithin.

Optionally, the emulsifier is a vegetable lecithin.

Optionally, the emulsifier is a sunflower lecithin.

Preferably, the chocolate analogue comprises:
(a) an unhydrolysed oat flour, wherein 50% of the flour has a particle size of less than 50 µm in an amount of about 10 %(w/w) relative to the weight of the chocolate analogue,
(b) non-fat cocoa solids in an amount of about 2 %(w/w) relative to the weight of the chocolate analogue,
(c) cocoa butter in an amount of about 40 %(w/w) relative to the weight of the chocolate analogue,
(d) refined sucrose in an amount of about 45 %(w/w) relative to the weight of the chocolate analogue, and
(e) lecithin.

Optionally, the chocolate analogue comprises the emulsifier in an amount of at least 0.05 %(w/w) relative to the weight of the chocolate analogue.

Optionally, the chocolate analogue comprises the emulsifier in an amount of at least 0.05, optionally at least 0.06, optionally at least 0.07, optionally at least 0.08, optionally at least 0.09, optionally at least 0.1, optionally at least 0.11, optionally at least 0.12, optionally at least 0.13, optionally at least 0.14, optionally at least 0.15 %(w/w) relative to the weight of the chocolate analogue.

Optionally, the chocolate analogue comprises the emulsifier in an amount of at least 0.05 - 0.15, optionally 0.06 - 0.14, optionally 0.07 - 0.13, optionally 0.08 - 0.12, optionally 0.09 - 0.11, optionally 0.1 %(w/w) relative to the weight of the chocolate analogue.

Preferably, the chocolate analogue comprises the emulsifier in an amount of about 0.1 %(w/w) relative to the weight of the chocolate analogue.

Preferably, the chocolate analogue comprises:
(a) an unhydrolysed oat flour, wherein 50% of the flour has a particle size of less than 50 µm in an amount of about 10 %(w/w) relative to the weight of the chocolate analogue,
(b) non-fat cocoa solids in an amount of about 2 %(w/w) relative to the weight of the chocolate analogue,
(c) cocoa butter in an amount of about 40 %(w/w) relative to the weight of the chocolate analogue,
(d) refined sucrose in an amount of about 45 %(w/w) relative to the weight of the chocolate analogue, and
(e) an emulsifier in an amount of about 0.1 %(w/w) relative to the weight of the chocolate analogue.

Optionally, the chocolate analogue comprises lecithin in an amount of at least 0.05 %(w/w) relative to the weight of the chocolate analogue.

Optionally, the chocolate analogue comprises lecithin in an amount of at least 0.05, optionally at least 0.06, optionally at least 0.07, optionally at least 0.08, optionally at least 0.09, optionally at least 0.1, optionally at least 0.11, optionally at least 0.12, optionally at least 0.13, optionally at least 0.14, optionally at least 0.15 %(w/w) relative to the weight of the chocolate analogue.

Optionally, the chocolate analogue comprises lecithin in an amount of at least 0.05 - 0.15, optionally 0.06 - 0.14, optionally 0.07 - 0.13, optionally 0.08 - 0.12, optionally 0.09 - 0.11, optionally 0.1 %(w/w) relative to the weight of the chocolate analogue.

Preferably, the chocolate analogue comprises lecithin in an amount of about 0.1 %(w/w) relative to the weight of the chocolate analogue.

Preferably, the chocolate analogue comprises:
(a) an unhydrolysed oat flour, wherein 50% of the flour has a particle size of less than 50 µm in an amount of about 10 %(w/w) relative to the weight of the chocolate analogue,
(b) non-fat cocoa solids in an amount of about 2 %(w/w) relative to the weight of the chocolate analogue,
(c) cocoa butter in an amount of about 40 %(w/w) relative to the weight of the chocolate analogue,
(d) refined sucrose in an amount of about 45 %(w/w) relative to the weight of the chocolate analogue, and
(e) lecithin in an amount of about 0.1 %(w/w) relative to the weight of the chocolate analogue.

According to a second aspect of the present invention, there is provided a method of producing a chocolate analogue, the method comprising admixing:
(a) a flour,
(b) cocoa, and
(c) a fat.

Optionally, the method further comprises admixing sweetener.

Optionally, the method comprises admixing:
(a) a flour,
(b) cocoa,
(c) a fat, and
(d) a sweetener.

Optionally, the method further comprises admixing an emulsifier.

Optionally, the method comprises admixing:
(a) a flour,
(b) cocoa,
(c) a fat, and
(d) an emulsifier.

Optionally, the method comprises admixing:
(a) a flour,
(b) cocoa,
(c) a fat,
(d) a sweetener, and
(e) an emulsifier.

Preferably, the method comprises admixing:
(a) a flour,
(b) cocoa,
(c) a fat,
(d) a sweetener, and
(e) an emulsifier.

Optionally, the flour is a ground flour.

Optionally or additionally, the flour is a milled flour.

Optionally or additionally, the flour is a roller milled flour.

Optionally or additionally, the flour is a purified flour.

Optionally or additionally, the flour is a sifted flour.

Optionally or additionally, the flour is a mechanically separated flour.

Optionally or additionally, the flour is a screened flour.

Optionally or additionally, the flour is a fluid classified flour.

Optionally or additionally, the flour is a gas classified flour.

Optionally or additionally, the flour is an air classified flour.

Optionally, the method comprises the step of grinding the flour.

Optionally or additionally, the method comprises the step of milling the flour.

Optionally or additionally, the method comprises the step of roller milling the flour.

Optionally or additionally, the method comprises the step of purifying the flour.

Optionally or additionally, the method comprises the step of sifting the flour.

Optionally or additionally, the method comprises the step of mechanically separating the flour.

Optionally or additionally, the method comprises the step of screening the flour.

Optionally or additionally, the method comprises the step of fluid classifying the flour.

Optionally or additionally, the method comprises the step of gas classifying the flour.

Optionally or additionally, the method comprises the step of air classifying the flour.

Optionally, the flour has a particle size of less than 600 µm.

Optionally, the flour has a particle size of less than 600, optionally less than 550, optionally less than 500, optionally less than 450, optionally less than 400, optionally less than 350, optionally less than 300, optionally less than 250, optionally less than 200, optionally less than 100, optionally less than 50 µm.

Optionally, the flour has a particle size of less than 600, optionally less than 550, optionally less than 540, optionally less than 530, optionally less than 520, optionally less than 510, optionally less than 500, optionally less than 490, optionally less than 480, optionally less than 470, optionally less than 460, optionally less than 450, optionally less than 440, optionally less than 430, optionally less than 420, optionally less than 410, optionally less than 400, optionally less than 390, optionally less than 380, optionally less than 370, optionally less than 360, optionally less than 350, optionally less than 340, optionally less than 330, optionally less than 320, optionally less than 310, optionally less than 300, optionally less than 290, optionally less than 280, optionally less than 270, optionally less than 260, optionally less than 250, optionally less than 200, optionally less than 150, optionally less than 100, optionally less than 50 µm.

Preferably, the flour has a particle size of less than 550 µm.

Further preferably, the flour has a particle size of less than 270 µm.

Optionally, the flour has an average particle size of less than 600 µm.

Optionally, the flour has an average particle size of less than 600, optionally less than 550, optionally less than 500, optionally less than 450, optionally less than 400, optionally less than 350, optionally less than 300, optionally less than 250, optionally less than 200, optionally less than 100, optionally less than 50 µm.

Optionally, the flour has an average particle size of less than 600, optionally less than 550, optionally less than 540, optionally less than 530, optionally less than 520, optionally less than 510, optionally less than 500, optionally less than 490, optionally less than 480, optionally less than 470, optionally less than 460, optionally less than 450, optionally less than 440, optionally less than 430, optionally less than 420, optionally less than 410, optionally less than 400, optionally less than 390, optionally less than 380, optionally less than 370, optionally less than 360, optionally less than 350, optionally less than 340, optionally less than 330, optionally less than 320, optionally less than 310, optionally less than 300, optionally less than 290, optionally less than 280, optionally less than 270, optionally less than 260, optionally less than 250, optionally less than 200, optionally less than 150, optionally less than 100, optionally less than 50 µm.

Preferably, the flour has an average particle size of less than 550 µm.

Further preferably, the flour has an average particle size of less than 270 µm.

Optionally, the flour has a particle size distribution of less than 600 µm.

Optionally, the flour has a particle size distribution of less than 600, optionally less than 550, optionally less than 500, optionally less than 450, optionally less than 400, optionally less than 350, optionally less than 300, optionally less than 250, optionally less than 200, optionally less than 100, optionally less than 50 µm.

Optionally, the flour has a particle size distribution of less than 600, optionally less than 550, optionally less than 540, optionally less than 530, optionally less than 520, optionally less than 510, optionally less than 500, optionally less than 490, optionally less than 480, optionally less than 470, optionally less than 460, optionally less than 450, optionally less than 440, optionally less than 430, optionally less than 420, optionally less than 410, optionally less than 400, optionally less than 390, optionally less than 380, optionally less than 370, optionally less than 360, optionally less than 350, optionally less than 340, optionally less than 330, optionally less than 320, optionally less than 310, optionally less than 300, optionally less than 290, optionally less than 280, optionally less than 270, optionally less than 260, optionally less than 250, optionally less than 200, optionally less than 150, optionally less than 100, optionally less than 50 µm.

Preferably, the flour has a particle size distribution of less than 550 µm.

Further preferably, the flour has a particle size distribution of less than 270 µm.

Optionally, the flour has a particle size distribution of 50 - 600 µm.

Optionally, the flour has a particle size distribution of 50 - 600, optionally 100 - 550, optionally 150 - 500, optionally 200 - 450, optionally 250 - 400, optionally 300 - 350 µm.

Optionally, the flour has a particle size distribution of 50 - 600, optionally 100 - 550, optionally 150 - 500, optionally 200 - 450, optionally 210 - 440, optionally 220 - 420, optionally 230 - 410, optionally 240 - 400, optionally 250 - 390, optionally 260 - 380, optionally 270 - 370, optionally 280 - 360, optionally 290 - 350, optionally 300 - 340, optionally 310 - 330 µm.

Preferably, the flour has a particle size distribution of 100 - 550 µm.

Further preferably, the flour has a particle size distribution of 270 - 370 µm.

Optionally, at least 50% of the flour has a particle size distribution of less than 600 µm, optionally on a v/v basis.

Optionally, at least 50% of the flour has a particle size distribution of less than 600, optionally less than 550, optionally less than 500, optionally less than 450, optionally less than 400, optionally less than 350, optionally less than 300, optionally less than 250, optionally less than 200, optionally less than 100, optionally less than 50 µm, optionally on a v/v basis.

Optionally, at least 50% of the flour has a particle size distribution of less than 600, optionally less than 550, optionally less than 540, optionally less than 530, optionally less than 520, optionally less than 510, optionally less than 500, optionally less than 490, optionally less than 480, optionally less than 470, optionally less than 460, optionally less than 450, optionally less than 440, optionally less than 430, optionally less than 420, optionally less than 410, optionally less than 400, optionally less than 390, optionally less than 380, optionally less than 370, optionally less than 360, optionally less than 350, optionally less than 340, optionally less than 330, optionally less than 320, optionally less than 310, optionally less than 300, optionally less than 290, optionally less than 280, optionally less than 270, optionally less than 260, optionally less than 250, optionally less than 200, optionally less than 150, optionally less than 100, optionally less than 50 µm, optionally on a v/v basis.

Preferably, at least 50% of the flour has a particle size distribution of less than 550 µm, optionally on a v/v basis.

Further preferably, at least 50% of the flour has a particle size distribution of less than 270 µm, optionally on a v/v basis.

Optionally, at least 50% of the flour has a particle size distribution of 50 - 600 µm, optionally on a v/v basis.

Optionally, at least 50% of the flour has a particle size distribution of 50 - 600, optionally 100 - 550, optionally 150 - 500, optionally 200 - 450, optionally 250 - 400, optionally 300 - 350 µm, optionally on a v/v basis.

Optionally, at least 50% of the flour has a particle size distribution of 50 - 600, optionally 100 - 550, optionally 150 - 500, optionally 200 - 450, optionally 210 - 440, optionally 220 - 420, optionally 230 - 410, optionally 240 - 400, optionally 250 - 390, optionally 260 - 380, optionally 270 - 370, optionally 280 - 360, optionally 290 - 350, optionally 300 - 340, optionally 310 - 330 µm, optionally on a v/v basis.

Preferably, at least 50% of the flour has a particle size distribution of 100 - 550 µm, optionally on a v/v basis.

Further preferably, at least 50% of the flour has a particle size distribution of 270 - 370 µm, optionally on a v/v basis.

Optionally, at least 90% of the flour has a particle size distribution of less than 600 µm, optionally on a v/v basis.

Optionally, at least 90% of the flour has a particle size distribution of less than 600, optionally less than 550, optionally less than 500, optionally less than 450, optionally less than 400, optionally less than 350, optionally less than 300, optionally less than 250, optionally less than 200, optionally less than 100, optionally less than 50 µm, optionally on a v/v basis.

Optionally, at least 90% of the flour has a particle size distribution of less than 600, optionally less than 550, optionally less than 540, optionally less than 530, optionally less than 520, optionally less than 510, optionally less than 500, optionally less than 490, optionally less than 480, optionally less than 470, optionally less than 460, optionally less than 450, optionally less than 440, optionally less than 430, optionally less than 420, optionally less than 410, optionally less than 400, optionally less than 390, optionally less than 380, optionally less than 370, optionally less than 360, optionally less than 350, optionally less than 340, optionally less than 330, optionally less than 320, optionally less than 310, optionally less than 300, optionally less than 290, optionally less than 280, optionally less than 270, optionally less than 260, optionally less than 250, optionally less than 200, optionally less than 150, optionally less than 100, optionally less than 50 µm, optionally on a v/v basis.

Preferably, at least 90% of the flour has a particle size distribution of less than 550 µm, optionally on a v/v basis.

Further preferably, at least 90% of the flour has a particle size distribution of less than 270 µm, optionally on a v/v basis.

Optionally, at least 90% of the flour has a particle size distribution of 50 - 600 µm, optionally on a v/v basis.

Optionally, at least 90% of the flour has a particle size distribution of 50 - 600, optionally 100 - 550, optionally 150 - 500, optionally 200 - 450, optionally 250 - 400, optionally 300 - 350 µm, optionally on a v/v basis.

Optionally, at least 90% of the flour has a particle size distribution of 50 - 600, optionally 100 - 550, optionally 150 - 500, optionally 200 - 450, optionally 210 - 440, optionally 220 - 420, optionally 230 - 410, optionally 240 - 400, optionally 250 - 390, optionally 260 - 380, optionally 270 - 370, optionally 280 - 360, optionally 290 - 350, optionally 300 - 340, optionally 310 - 330 µm, optionally on a v/v basis.

Preferably, at least 90% of the flour has a particle size distribution of 100 - 550 µm, optionally on a v/v basis.

Further preferably, at least 90% of the flour has a particle size distribution of 270 - 370 µm, optionally on a v/v basis.

Optionally, at least 99% of the flour has a particle size distribution of less than 600 µm, optionally on a v/v basis.

Optionally, at least 99% of the flour has a particle size distribution of less than 600, optionally less than 550, optionally less than 500, optionally less than 450, optionally less than 400, optionally less than 350, optionally less than 300, optionally less than 250, optionally less than 200, optionally less than 100, optionally less than 50 µm, optionally on a v/v basis.

Optionally, at least 99% of the flour has a particle size distribution of less than 600, optionally less than 550, optionally less than 540, optionally less than 530, optionally less than 520, optionally less than 510, optionally less than 500, optionally less than 490, optionally less than 480, optionally less than 470, optionally less than 460, optionally less than 450, optionally less than 440, optionally less than 430, optionally less than 420, optionally less than 410, optionally less than 400, optionally less than 390, optionally less than 380, optionally less than 370, optionally less than 360, optionally less than 350, optionally less than 340, optionally less than 330, optionally less than 320, optionally less than 310, optionally less than 300, optionally less than 290, optionally less than 280, optionally less than 270, optionally less than 260, optionally less than 250, optionally less than 200, optionally less than 150, optionally less than 100, optionally less than 50 µm, optionally on a v/v basis.

Preferably, at least 99% of the flour has a particle size distribution of less than 550 µm, optionally on a v/v basis.

Further preferably, at least 99% of the flour has a particle size distribution of less than 270 µm, optionally on a v/v basis.

Optionally, at least 99% of the flour has a particle size distribution of 50 - 600 µm, optionally on a v/v basis.

Optionally, at least 99% of the flour has a particle size distribution of 50 - 600, optionally 100 - 550, optionally 150 - 500, optionally 200 - 450, optionally 250 - 400, optionally 300 - 350 µm, optionally on a v/v basis.

Optionally, at least 99% of the flour has a particle size distribution of 50 - 600, optionally 100 - 550, optionally 150 - 500, optionally 200 - 450, optionally 210 - 440, optionally 220 - 420, optionally 230 - 410, optionally 240 - 400, optionally 250 - 390, optionally 260 - 380, optionally 270 - 370, optionally 280 - 360, optionally 290 - 350, optionally 300 - 340, optionally 310 - 330 µm, optionally on a v/v basis.

Preferably, at least 99% of the flour has a particle size distribution of 100 - 550 µm, optionally on a v/v basis.

Further preferably, at least 99% of the flour has a particle size distribution of 270 - 370 µm, optionally on a v/v basis.

Optionally, 50% of the flour has a particle size of less than 90 µm.

Optionally, 50% of the flour has a particle size of less than 90, optionally less than 85, optionally less than 80, optionally less than 75, optionally less than 70, optionally less than 65, optionally less than 60, optionally less than 55, optionally less than 50, optionally less than 45, optionally less than 40, optionally less than 35, optionally less than 30, optionally less than 25, optionally less than 20, optionally less than 15, optionally less than 10 µm.

Preferably, 50% of the flour has a particle size of less than 80 µm.

Further preferably, 50% of the flour has a particle size of less than 50 µm.

Preferably, the method comprises admixing:
(a) a flour, wherein 50% of the flour has a particle size of less than 50 µm,
(b) cocoa,
(c) a fat,
(d) a sweetener, and
(e) an emulsifier.

Optionally, the particle size is measured using a technique selected from dynamic light scattering (DLS), static light scattering, laser diffraction (LD), near-infrared reflectance spectroscopy, sedimentation, microscopy, and sieve analysis.

Optionally, the particle size is measured using a dry technique selected from dynamic light scattering (DLS), static light scattering, laser diffraction (LD), near-infrared reflectance spectroscopy, sedimentation, microscopy, and sieve analysis.

Optionally, the particle size is measured using a wet technique selected from dynamic light scattering (DLS), static light scattering, laser diffraction (LD), near-infrared reflectance spectroscopy, sedimentation, microscopy, and sieve analysis.

Optionally, the particle size is measured using a wet technique using water, ethanol, isopropanol, or octane as solvent.

Preferably, the particle size is measured using laser diffraction (LD).

Optionally, the particle size is measured using laser diffraction (LD) having an active beam length of 2.4 mm.

Optionally, the particle size is measured using laser diffraction (LD) having an absorbance is in the range 12 - 16 %.

Optionally, the particle size is measured using the Fraunhofer diffraction theory of light scattering.

Optionally, the particle size is measured using the Mie theory of light scattering.

Preferably, the particle size is measured using the Mie theory of light scattering.

Optionally, the particle size is measured as an equivalent sphere diameter.

Optionally, the particle size is measured as a volume equivalent sphere diameter.

Preferably, the particle size is measured as a volume equivalent sphere diameter.

Optionally, the flour is a grain flour.

Optionally, the flour is a cereal flour.

Optionally, the flour is a rice, wheat, rye, oat, barley, millet, or maize flour.

Preferably, the flour is an oat flour.

Optionally, the flour is a whole-grain flour.

Optionally, the flour is a whole-grain flour comprising at least one of the endosperm, germ, and bran of the cereal.

Optionally, the flour is a refined flour.

Optionally, the flour is a refined flour comprising the endosperm of the cereal.

Optionally, the flour is a refined flour consisting of the endosperm of the cereal.

Preferably, the method comprises admixing:
(a) an oat flour, wherein 50% of the flour has a particle size of less than 50 µm,
(b) cocoa,
(c) a fat,
(d) a sweetener, and
(e) an emulsifier.

Optionally, the method comprises hydrolysing the grain flour.

Optionally, the method comprises hydrolysing the cereal flour.

Optionally, the method comprises hydrolysing the rice, wheat, rye, oat, barley, millet, or maize flour.

Optionally, the flour has substantially no starch.

Optionally, the flour has less than 60 % starch on a dry basis.

Optionally, the flour has less than 60, optionally less than 50, optionally less than 40, optionally less than 30, optionally less than 20, optionally less than 10, optionally less than 5, optionally less than 4, optionally less than 3, optionally less than 2, optionally less than 1 % starch on a dry basis.

Optionally, the method excludes hydrolysing the grain flour.

Optionally, the method excludes hydrolysing the cereal flour.

Optionally, the method excludes hydrolysing the rice, wheat, rye, oat, barley, millet, or maize flour.

Preferably, the method excludes hydrolysing the oat flour.

Preferably, the method comprises admixing:
(a) an unhydrolysed oat flour, wherein 50% of the flour has a particle size of less than 50 µm,
(b) cocoa,
(c) a fat,
(d) a sweetener, and
(e) an emulsifier.

Optionally, the method comprises admixing the flour in an amount of at least 1 %(w/w) relative to the weight of the chocolate analogue.

Optionally, the method comprises admixing the flour in an amount of at least 1, optionally at least 2, optionally at least 4, optionally at least 6, optionally at least 8, optionally at least 10, optionally at least 12, optionally at least 14, optionally at least 16, optionally at least 18, optionally at least 20, optionally at least 22, optionally at least 24, optionally at least 26, optionally at least 28, optionally at least 30 %(w/w) relative to the weight of the chocolate analogue.

Optionally, the method comprises admixing the flour in an amount of about 1 - 30, optionally about 2 - 28, optionally about 4 - 26, optionally about 6 - 24, optionally about 8 - 22, optionally about 10 - 20, optionally about 12 - 18, optionally about 14 - 16 %(w/w) relative to the weight of the chocolate analogue.

Preferably, the method comprises admixing the flour in an amount of about 10 - 20 %(w/w) relative to the weight of the chocolate analogue.

Preferably, the method comprises admixing the flour in an amount of about 10 %(w/w) relative to the weight of the chocolate analogue.

Preferably, the method comprises admixing:
(a) an unhydrolysed oat flour, wherein 50% of the flour has a particle size of less than 50 µm in an amount of about 10 %(w/w) relative to the weight of the chocolate analogue,
(b) cocoa,
(c) a fat,
(d) a sweetener, and
(e) an emulsifier.

Optionally, the cocoa is a cocoa liquor.

Optionally, the cocoa is a cocoa mass.

Optionally, the method comprises admixing the cocoa in an amount of at least 2 %(w/w) relative to the weight of the chocolate analogue.

Optionally, the method comprises admixing the cocoa in an amount of at least 2, optionally at least 4, optionally at least 6, optionally at least 8, optionally at least 10, optionally at least 12, optionally at least 14, optionally at least 16, optionally at least 18, optionally at least 20 %(w/w) relative to the weight of the chocolate analogue.

Optionally, the method comprises admixing the cocoa in an amount of 2 - 20, optionally 4-18, optionally 6 - 16, optionally 8 - 14, optionally 10 - 12 %(w/w) relative to the weight of the chocolate analogue.

Preferably, the method comprises admixing the cocoa in an amount of about 2 %(w/w) relative to the weight of the chocolate analogue.

Preferably, the method comprises admixing:
(a) an unhydrolysed oat flour, wherein 50% of the flour has a particle size of less than 50 µm in an amount of about 10 %(w/w) relative to the weight of the chocolate analogue,
(b) cocoa in an amount of about 2 %(w/w) relative to the weight of the chocolate analogue,
(c) a fat,
(d) a sweetener, and
(e) an emulsifier.

Optionally, the cocoa comprises non-fat cocoa solids.

Optionally, the cocoa is non-fat cocoa solids.

Preferably, the method comprises admixing:
(a) an unhydrolysed oat flour, wherein 50% of the flour has a particle size of less than 50 µm in an amount of about 10 %(w/w) relative to the weight of the chocolate analogue,
(b) non-fat cocoa solids,
(c) a fat,
(d) a sweetener, and
(e) an emulsifier.

Optionally, the method comprises admixing non-fat cocoa solids in an amount of at least 2 %(w/w) relative to the weight of the chocolate analogue.

Optionally, the method comprises admixing non-fat cocoa solids in an amount of at least 2, optionally at least 4, optionally at least 6, optionally at least 8, optionally at least 10, optionally at least 12, optionally at least 14, optionally at least 16, optionally at least 18, optionally at least 20 %(w/w) relative to the weight of the chocolate analogue.

Optionally, the method comprises admixing non-fat cocoa solids in an amount of 2 - 20, optionally 4 - 18, optionally 6 - 16, optionally 8 - 14, optionally 10 - 12 %(w/w) relative to the weight of the chocolate analogue.

Preferably, the method comprises admixing non-fat cocoa solids in an amount of about 2 %(w/w) relative to the weight of the chocolate analogue.

Preferably, the method comprises admixing:
(a) an unhydrolysed oat flour, wherein 50% of the flour has a particle size of less than 50 µm in an amount of about 10 %(w/w) relative to the weight of the chocolate analogue,
(b) non-fat cocoa solids in an amount of about 2 %(w/w) relative to the weight of the chocolate analogue,
(c) a fat,
(d) a sweetener, and
(e) an emulsifier.

Optionally, the method comprises admixing the fat in an amount of at least 20 %(w/w) relative to the weight of the chocolate analogue.

Optionally, the method comprises admixing the fat in an amount of at least 20, optionally at least 25, optionally at least 30, optionally at least 35, optionally at least 40, optionally at least 45, optionally at least 50, optionally at least 55, optionally at least 60 %(w/w) relative to the weight of the chocolate analogue.

Optionally, the method comprises admixing the fat in an amount of 20 - 60, optionally 25 - 55, optionally 30 - 50, optionally 35 - 45, optionally 40 %(w/w) relative to the weight of the chocolate analogue.

Preferably, the method comprises admixing the fat in an amount of about 40 %(w/w) relative to the weight of the chocolate analogue.

Preferably, the method comprises admixing:
(a) an unhydrolysed oat flour, wherein 50% of the flour has a particle size of less than 50 µm in an amount of about 10 %(w/w) relative to the weight of the chocolate analogue,
(b) non-fat cocoa solids in an amount of about 2 %(w/w) relative to the weight of the chocolate analogue,
(c) a fat in an amount of about 40 %(w/w) relative to the weight of the chocolate analogue,
(d) a sweetener, and
(e) an emulsifier.

Optionally, the fat is cocoa butter.

Optionally, the method comprises admixing cocoa butter in an amount of at least 20 %(w/w) relative to the weight of the chocolate analogue.

Optionally, the method comprises admixing cocoa butter in an amount of at least 20, optionally at least 25, optionally at least 30, optionally at least 35, optionally at least 40, optionally at least 45, optionally at least 50, optionally at least 55, optionally at least 60 %(w/w) relative to the weight of the chocolate analogue.

Optionally, the method comprises admixing cocoa butter in an amount of 20 - 60, optionally 25 - 55, optionally 30 - 50, optionally 35 - 45, optionally 40 %(w/w) relative to the weight of the chocolate analogue.

Preferably, the method comprises admixing cocoa butter in an amount of about 40 %(w/w) relative to the weight of the chocolate analogue.

Preferably, the method comprises admixing:
(a) an unhydrolysed oat flour, wherein 50% of the flour has a particle size of less than 50 µm in an amount of about 10 %(w/w) relative to the weight of the chocolate analogue,
(b) non-fat cocoa solids in an amount of about 2 %(w/w) relative to the weight of the chocolate analogue,
(c) cocoa butter in an amount of about 40 %(w/w) relative to the weight of the chocolate analogue,
(d) a sweetener, and
(e) an emulsifier.

Optionally, the sweetener is a sugar.

Optionally, the sweetener is a disaccharide sugar.

Optionally, the sweetener is a sugar selected from at least one of sucrose, lactose, and maltose.

Optionally, the sweetener is a sucrose.

Optionally, the sweetener is a refined sugar.

Optionally, the sweetener is a refined disaccharide sugar.

Optionally, the sweetener is a refined sucrose.

Preferably, the method comprises admixing:
(a) an unhydrolysed oat flour, wherein 50% of the flour has a particle size of less than 50 µm in an amount of about 10 %(w/w) relative to the weight of the chocolate analogue,
(b) non-fat cocoa solids in an amount of about 2 %(w/w) relative to the weight of the chocolate analogue,
(c) cocoa butter in an amount of about 40 %(w/w) relative to the weight of the chocolate analogue,
(d) a refined sucrose, and
(e) an emulsifier.

Optionally, the method comprises admixing the sweetener in an amount of at least 25 %(w/w) relative to the weight of the chocolate analogue.

Optionally, the method comprises admixing the sweetener in an amount of at least 25, optionally at least 30, optionally at least 35, optionally at least 40, optionally at least 45, optionally at least 50, optionally at least 55, optionally at least 60 %(w/w) relative to the weight of the chocolate analogue.

Optionally, the method comprises admixing the sweetener in an amount of 25 - 60, optionally 30 - 55, optionally 35 - 50, optionally 40 - 45 %(w/w) relative to the weight of the chocolate analogue.

Preferably, the method comprises admixing the sweetener in an amount of about 45 %(w/w) relative to the weight of the chocolate analogue.

Preferably, the method comprises admixing:
(a) an unhydrolysed oat flour, wherein 50% of the flour has a particle size of less than 50 µm in an amount of about 10 %(w/w) relative to the weight of the chocolate analogue,
(b) non-fat cocoa solids in an amount of about 2 %(w/w) relative to the weight of the chocolate analogue,
(c) cocoa butter in an amount of about 40 %(w/w) relative to the weight of the chocolate analogue,
(d) the sweetener in an amount of about 45 %(w/w) relative to the weight of the chocolate analogue, and
(e) an emulsifier.

Optionally, the method comprises admixing refined sucrose in an amount of at least 25 %(w/w) relative to the weight of the chocolate analogue.

Optionally, the method comprises admixing refined sucrose in an amount of at least 25, optionally at least 30, optionally at least 35, optionally at least 40, optionally at least 45, optionally at least 50, optionally at least 55, optionally at least 60 %(w/w) relative to the weight of the chocolate analogue.

Optionally, the method comprises admixing refined sucrose in an amount of 25 - 60, optionally 30 - 55, optionally 35 - 50, optionally 40 - 45 %(w/w) relative to the weight of the chocolate analogue.

Preferably, the method comprises admixing refined sucrose in an amount of about 45 %(w/w) relative to the weight of the chocolate analogue.

Preferably, the method comprises admixing:
(a) an unhydrolysed oat flour, wherein 50% of the flour has a particle size of less than 50 µm in an amount of about 10 %(w/w) relative to the weight of the chocolate analogue,
(b) non-fat cocoa solids in an amount of about 2 %(w/w) relative to the weight of the chocolate analogue,
(c) cocoa butter in an amount of about 40 %(w/w) relative to the weight of the chocolate analogue,
(d) refined sucrose in an amount of about 45 %(w/w) relative to the weight of the chocolate analogue, and
(e) an emulsifier.

Optionally, the emulsifier is a lecithin.

Optionally, the emulsifier is a plant lecithin.

Optionally, the emulsifier is a vegetable lecithin.

Optionally, the emulsifier is a sunflower lecithin.

Preferably, the method comprises admixing:
(a) an unhydrolysed oat flour, wherein 50% of the flour has a particle size of less than 50 µm in an amount of about 10 %(w/w) relative to the weight of the chocolate analogue,
(b) non-fat cocoa solids in an amount of about 2 %(w/w) relative to the weight of the chocolate analogue,
(c) cocoa butter in an amount of about 40 %(w/w) relative to the weight of the chocolate analogue,
(d) refined sucrose in an amount of about 45 %(w/w) relative to the weight of the chocolate analogue, and
(e) lecithin.

Optionally, the method comprises admixing the emulsifier in an amount of at least 0.05 %(w/w) relative to the weight of the chocolate analogue.

Optionally, the method comprises admixing the emulsifier in an amount of at least 0.05, optionally at least 0.06, optionally at least 0.07, optionally at least 0.08, optionally at least 0.09, optionally at least 0.1, optionally at least 0.11, optionally at least 0.12, optionally at least 0.13, optionally at least 0.14, optionally at least 0.15 %(w/w) relative to the weight of the chocolate analogue.

Optionally, the method comprises admixing the emulsifier in an amount of at least 0.05 - 0.15, optionally 0.06 - 0.14, optionally 0.07 - 0.13, optionally 0.08 - 0.12, optionally 0.09 - 0.11, optionally 0.1 %(w/w) relative to the weight of the chocolate analogue.

Preferably, the method comprises admixing the emulsifier in an amount of about 0.1 %(w/w) relative to the weight of the chocolate analogue.

Preferably, the method comprises admixing:
(a) an unhydrolysed oat flour, wherein 50% of the flour has a particle size of less than 50 µm in an amount of about 10 %(w/w) relative to the weight of the chocolate analogue,
(b) non-fat cocoa solids in an amount of about 2 %(w/w) relative to the weight of the chocolate analogue,
(c) cocoa butter in an amount of about 40 %(w/w) relative to the weight of the chocolate analogue,
(d) refined sucrose in an amount of about 45 %(w/w) relative to the weight of the chocolate analogue, and
(e) an emulsifier in an amount of about 0.1 %(w/w) relative to the weight of the chocolate analogue.

Optionally, the method comprises admixing lecithin in an amount of at least 0.05 %(w/w) relative to the weight of the chocolate analogue.

Optionally, the method comprises admixing lecithin in an amount of at least 0.05, optionally at least 0.06, optionally at least 0.07, optionally at least 0.08, optionally at least 0.09, optionally at least 0.1, optionally at least 0.11, optionally at least 0.12, optionally at least 0.13, optionally at least 0.14, optionally at least 0.15 %(w/w) relative to the weight of the chocolate analogue.

Optionally, the method comprises admixing lecithin in an amount of at least 0.05 - 0.15, optionally 0.06 - 0.14, optionally 0.07 - 0.13, optionally 0.08 - 0.12, optionally 0.09 - 0.11, optionally 0.1 %(w/w) relative to the weight of the chocolate analogue.

Preferably, the method comprises admixing lecithin in an amount of about 0.1 %(w/w) relative to the weight of the chocolate analogue.

Preferably, the method comprises admixing:
(a) an unhydrolysed oat flour, wherein 50% of the flour has a particle size of less than 50 µm in an amount of about 10 %(w/w) relative to the weight of the chocolate analogue,
(b) non-fat cocoa solids in an amount of about 2 %(w/w) relative to the weight of the chocolate analogue,
(c) cocoa butter in an amount of about 40 %(w/w) relative to the weight of the chocolate analogue,
(d) refined sucrose in an amount of about 45 %(w/w) relative to the weight of the chocolate analogue, and
(e) lecithin in an amount of about 0.1 %(w/w) relative to the weight of the chocolate analogue.

Optionally, the method further comprises conching the admixed mixture.

Optionally, the method further comprises tempering the admixed mixture.

Optionally, the method further comprises shaping the admixed mixture.

Optionally, the method further comprises storing the admixed mixture.

### Brief description of the drawings

Embodiments of the present invention will be described with reference to the following non-limiting examples and the accompanying drawings in which:
**Figure 1** is confocal scanning laser microscopy (CLSM) of (a) unhydrolyzed oat flour having a particle size of less than 270 µm; (b) hydrolysed oat flour having a particle size of less than 270 µm; (c) a chocolate analogue comprising unhydrolyzed oat flour having a particle size of less than 270 µm; and (d) a chocolate analogue comprising hydrolysed oat flour having a particle size of less than 270 µm;
**Figure 2** is scanning electron microscopy (SEM) of (a) unhydrolyzed oat flour having a particle size of less than 270 µm; and (b) hydrolysed oat flour having a particle size of less than 270 µm; and
**Figure 3** is are graphs of sensory analysis of chocolate analogue samples based on (a) overall liking; (b) mouthfeel liking; and (c) flavour/taste Liking (sweetness).

### Examples

### Example 1

### Chocolate analogue production by laboratory-scale production process

Oat flours were provided by Tirlán (Tirlán Co-op, County Kilkenny, Ireland). All ingredients used in the examples were at least analytical grade. All ingredients are commercially available.

All the chocolate analogue samples were made at the Tirlán R&D Innovation Centre (Tirlán Co-op, County Kilkenny, Ireland) according to the methods described. A laboratory-scale chocolate grinder/melanger (Spectra 11SC Melanger, US) was used for production of chocolate analogue samples i.e. refining to reduce particle size of the mixture of sugar, cocoa liquor, cocoa butter, as well as conching steps to conch chocolate. All ingredients were provided according the sample recipe provided in Table 1 and to the methods described:

**Table 1. Sample recipe**

| **Ingredient** | **%(*w*/*w*)** |
|---|---|
| Icing sugar | 40.00 |
| Oat flour | 10.00 |
| Cocoa liquor/mass | 9.90 |
| Cocoa butter | 39.00 |
| Sunflower lecithin | 0.10 |
| Mycryo (pre-crystallised cocoa butter) | 1.00 |
| **Total** | **100.00** |

Clean moulds, the melanger bowl, and melanger wheels were put a standard incubator at 25-30°C. The ingredients of the sample recipe were weighed using a standard scales. The icing sugar was sieved using a standard sieve. The pre-crystallised cocoa butter was sieved using a standard sieve. The cocoa butter was heated to 55°C using a standard oven. The melanger was prepared, set, and sterilized according to the manufacturer's standard instructions. The cocoa mass was poured slowly, and the melanger was turned on at Speed 10 at the same time. Approximately 1/4 of the cocoa butter was added and mixed well for approximately 30 minutes until the cocoa mass and cocoa butter are well mixed. Approximately 1/4 of the melted cocoa butter was added. The oat flour was added slowly, maintaining constant temperature. The icing sugar was added slowly, maintaining constant temperature of approximately 30°C. The remaining cocoa butter was added slowly, maintaining constant temperature of approximately 31-33°C. The mixture was refined for approximately 1 hour. The refined mixture was conched for approximately 2.5 hours. Lecithin was mixed with a small quantity of cocoa butter, added to the conched mixture, and conched well for approximately 30 minutes. The chocolate analogue had a temperature of approximately 36°C. The chocolate analogue was poured into a standard dry bain-marie pot and the temperature reduced to approximately 34°C. The sieved pre-crystallised cocoa butter was added and mixed well (for tempering/seeding) and the temperature reduced to approximately 30°C. The chocolate analogue was poured into the clean moulds and the temperature reduced using a standard refrigerator for approximately 20 minutes. The chocolate analogue samples were removed from the moulds and left overnight in a standard refrigerator prior to packaging in a sealed bag for storage.

Nutritional information of a sample made using the above-mentioned sample recipe and method is provided in Table 2:

**Table 2. Nutritional Information**

| **Estimated Nutrition per 100g** | |
|---|---|
| Energy kJ | 2579 |
| Energy kcal | 621 |
| Protein | 2.8 |
| Total Fat | 46 |
| of which saturates | 27.8 |
| Carbohydrate (Total) | 47 |
| of which sugars | 38.8 |
| of which fibre | 2.8 |
| Salt | <1 |

### Example 2

### Microstructure Analysis

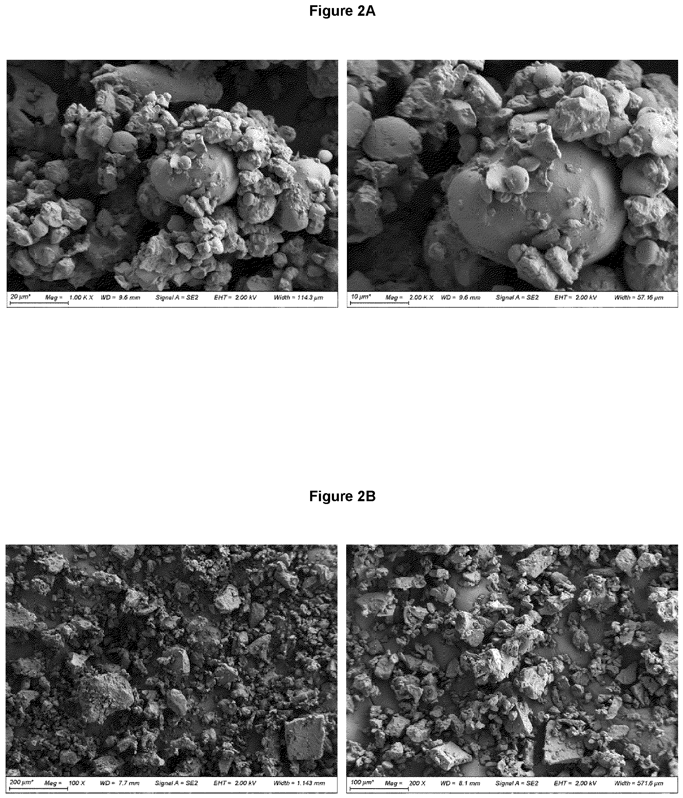

SEM was used to observe the microscopic particle morphology of starch in two different oat flour samples i.e., unhydrolyzed oat flour having a particle size of less than 270 µm (see Figure 2A) and hydrolysed oat flour having a particle size of less than 270 µm (see Figure 2B). Each oat flour sample was applied to stubs of a sputter coater using carbon tape, and was sputter-coated with gold under vacuum using an Emitech K575X sputter coater (Quorum Technologies, UK) according to the manufacturer's standard instructions. The samples were then imaged using a Gemini field emission scanning electron microscope (ZEISS, Germany) according to the manufacturer's standard instructions.

The starch particles of unhydrolyzed oat flour having a particle size of less than 270 µm were of different sizes e.g., round or oval, smooth in appearance, without cracks, and had irregular depressions in larger particles with cluster-particle aggregation. After the enzymatic hydrolysis i.e., liquefaction and saccharification producing hydrolysed oat flour having a particle size of less than 270 µm, the starch granules disappeared e.g., were broken into irregular polygonal shape dextrin and/or smaller sugar molecules.

The component distribution of oat flour samples was measured by confocal scanning laser microscopy (CLSM) using a confocal scanning laser microscope (LSM710 NLO, Zeiss, Gottingen, Germany). The samples were stained with Fluorescein Isothiocyanate (FITC), Fast Green and Nile Red according to the manufacturer's standard instructions. In the confocal images, blue indicates starch, and protein and fat are shown as red and green, respectively.

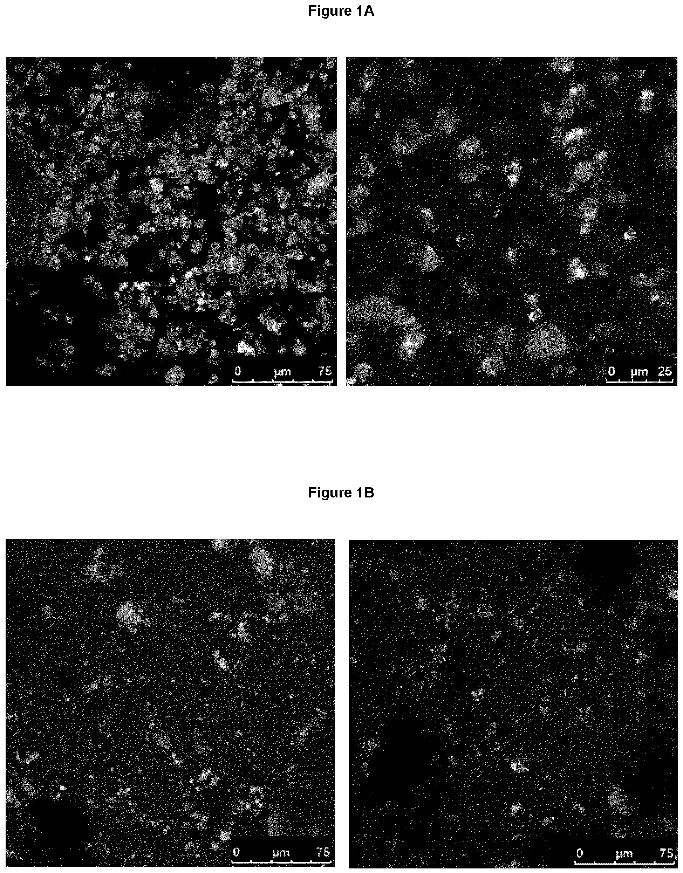

The intensity of starch (blue) was significantly decreased in hydrolysed oat flour having a particle size of less than 270 µm (see Figure 1B) compared to unhydrolyzed oat flour having a particle size of less than 270 µm (see Figure 1A), indicating that most of the starch was effectively hydrolyzed.

The component distribution of oat chocolate samples was measured by confocal scanning laser microscopy (CLSM) using a confocal scanning laser microscope SP5 (Leica, Mannheim, Germany). The stains used were Fast Green FCF, Nile Red, and Fluorescein Isothiocyanate (FITC) to label the protein, fat, and starch, respectively according to the manufacturer's standard instructions. To ensure the presence of starch in the samples and avoid overlapping of the channels, the samples were first stained with Fast Green and FITC, followed by labelling with all three components.

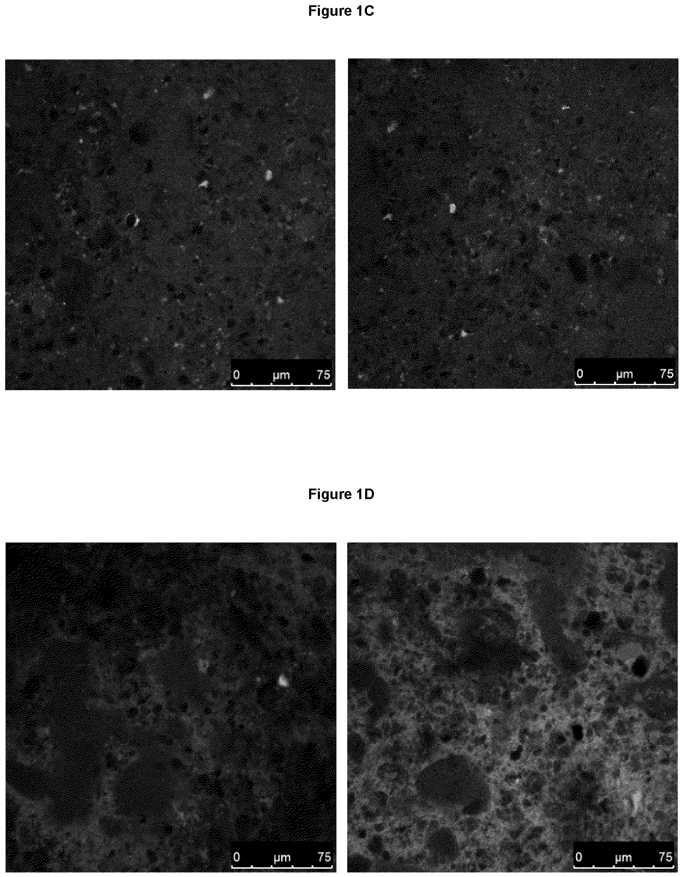

Figure 1C and Figure 1D are confocal scanning laser micrographs of two chocolate analogue samples i.e., a chocolate analogue comprising unhydrolyzed oat flour having a particle size of less than 270 µm (Figure 1C); and a chocolate analogue comprising hydrolysed oat flour having a particle size of less than 270 µm (Figure 1D). In the micrographs, the fluorescence green spots indicate starch and the red spots represent protein. The green matrix shows the continuous fat phase and the black spots indicate cocoa solids (smaller ones) and sugar crystals (cube-like shapes).

### Example 3

### Particle size distribution and thermal properties of oat flour

Thermal properties of oat flour samples were analysed using differential scanning calorimetry (DSC, TA-Q20 Instrument, USA) according to the manufacturer's standard instructions. Initially, the aluminium pans were filled with oat flour (9.0 mg, dry basis) and deionized water at a ratio of 1:3. The test procedure involved equilibrating at 5 °C for 1 minute and then heating to 180 °C at a rate of 5 °C/min. The parameters recorded in DSC were as follows: onset temperature (T_{O} °C), conclusion temperature (T_{c} °C), ΔH, and gelatinization temperature range (ΔT = T_{c} - T_{O}).

The particle size of oat flour samples was analysed using a Mastersizer 3000 laser particle size analyser with an Aero-S dry powder dispersing unit (Malvern Instruments Ltd., Worcestershire, UK) according to the manufacturer's standard instructions. The refractive index of the sample was 1.4683, input pressure 3 bar and feed rate 30%. All oat flour sample analyses were conducted in triplicate.

During gelatinization, water molecules penetrated the starch granules and destroyed the crystalline regions of the amylopectin chain. Compared to unhydrolyzed oat flour having a particle size of less than 270 µm, enzymatic hydrolysis significantly increased the T_{O} in hydrolysed oat flour having a particle size of less than 270 µm, resulting in smaller ΔT. The results (see Table 3) indicate that hydrolysed oat flour having a particle size of less than 270 µm had very low energy (ΔH) compared to the unhydrolyzed oat flours (i.e., unhydrolyzed oat flours having a particle size of less than 270 µm or a particle size of 550 µm), which would indicate that very little gelatinisation occurred in the hydrolysed oat flour having a particle size of less than 270 µm, followed by unhydrolyzed oat flour having a particle size of less than 270 µm, and unhydrolyzed oat flour having a particle size of less than 550 µm, respectively.

**Table 3. Particle size distributions and thermal properties of oat flours**

| **Oat flour** | **Particle Size (Malvern)** | **Thermal properties (DSC)** | | |
|---|---|---|---|---|
| | **D50 (µm)** | **Onset Temp. T_{O} (°C)** | **Conclusion Temp. T_{c} (°C)** | **Gelatinisation Temp. Range (ΔT = T_{c} - Tₒ)** |
| **Hydrolysed oat flour having a particle size of less than 270 µm** | 46.0 | 56.8 | 65.4 | 8.6 |
| **Unhydrolyzed oat flour having a particle size of less than 270 µm** | 46.7 | 54.3 | 69.9 | 15.6 |
| **Unhydrolyzed oat flour having a particle size of 550 µm** | 83.4 | 52.0 | 74.1 | 22.1 |

### Example 4

### Particle size distribution and thermal properties of chocolate analogue samples

Melting profile of chocolate analogue samples was determined using differential scanning calorimetry (DSC, TA -Q20 Instrument, USA) equipped with nitrogen gas flow rate of 50 ml/min according to the manufacturer's standard instructions. The samples were stored at 4 °C before sampling for DSC. Surface of the chocolate was scraped off with a scalpel and 5 to 10 mg of the chocolate slivers was hermetically sealed in an aluminium pan. The pan, filled with chocolate analogue slivers was then transferred to a freezer until analysis. An empty, covered aluminium sampling pan was used as the reference. The weight of tested samples, empty sampling pan as well as reference pan were recorded. When the system reached equilibrium conditions at 4 °C, the pan was put in the DSC cell and the thermograms were recorded by: (1) cooling from 4 to -20 °C at 5 °C /min and hold at -20 °C for 10 min; (2) heating from -20 to 60 °C at 5 °C /min and hold at 60 °C for 10 min and (3) cooling from 60 to -20 °C at 5 °C /min. Onset temperature (Tₒₙₛₑₜ), endset temperature (T_{end}), maximum peak temperature (Tₘₐₓ), melting enthalpy (ΔH) and peak area were calculated from the melting thermogram using DSC software. Tₒₙₛₑₜ is the temperature at which the corresponding crystal form starts to melt; T_{end} represents the temperature at which liquefaction of the sample is completed; ΔHₘₑₗₜ is the amount of energy required for complete melting of the sample. Tₘₐₓ is the temperature at which maximum melting occurs. Peak area is equivalent to the heat taken up by the sample during melting. All chocolate analogue sample analyses were conducted in triplicate.

The particle size of chocolate analogue samples was analysed using Mastersizer 3000 laser particle size analyzer with a Hydro LV wet dispersing unit (Malvern Instruments Ltd., Malvern, UK) according to the manufacturer's standard instructions. Initially, 0.3 g of chocolate analogue sample was shaved from a bar of chocolate analogue sample using a knife; and was then added to 8 mL of neat isopropyl alcohol (IPA) (2-propanol; propoan-2-ol) and vortexed for 20 seconds. The instrument settings were used according to the wet feed procedure with the material refractive index at 1.5 and the dispersant selected as propan-2-ol. The sonication feature was used for 90 seconds prior to the measurement being taken. The chocolate analogue sample/IPA mixtures were allowed to extract for at least 10 min, shaken prior to analysis and the representative sample was then added to the hydro attachment, which contained neat IPA, until the obscuration was in the range of 4% to 10%.

The melting enthalpy (ΔH) is the total energy (heat) given off by the sample when it changes from a crystal (solid fat) to a liquid (oil). Generally, a chocolate should remain solid at ambient temperature (20 to 25 °C) but, after being placed in a consumer's mouth, the cocoa fats break apart, and the chocolate begins to melt. Milk Chocolate with between 20 and 50% cocoa solids usually melts between 40 to 45°C. However, the mixture of ingredients in a chocolate formulation (e.g., cocoa butter, sugar, and oat flour) affect the melting characteristics of the chocolate product.

Chocolate analogue samples made using hydrolysed oat flour having a particle size of less than 270 µm or unhydrolyzed oat flour having a particle size of less than 270 µm were fully liquid at 39 to 40 °C; while the chocolate analogue samples made using unhydrolyzed oat flour having a particle size of 550 µm is fully liquid at the lower temperature of 33.0 °C as compared to the other two samples (see Table 4).

**Table 4. Particle size distribution and thermal properties of chocolate analogue samples**

| **Chocolate analogue sample comprising oat flour** | **Particle Size** | **Thermal properties (DSC)** | | |
|---|---|---|---|---|
| | **D50 (µm)** | **Max peak 1 °C (Tₘₐₓ)** | **End of melting °C (T_{end})** | **Melting enthalpy J/g (ΔHₘₑₗₜ)** |
| **Hydrolysed oat flour having a particle size of less than 270 µm** | 16.4 | 33.9 | 39.44 | 52.83 |
| **Unhydrolyzed oat flour having a particle size of less than 270 µm** | 12.7 | 34.25 | 40.28 | 47.78 |
| **Unhydrolyzed oat flour having a particle size of 550 µm** | 13.0 | 19.61 | 33.53 | 34.63 |

### Example 5

### Sensory analysis of chocolate analogue samples

A panel of 26 internal participants evaluated two chocolate analogue samples (a chocolate analogue comprising unhydrolyzed oat flour having a particle size of less than 270 µm; and a chocolate analogue comprising hydrolysed oat flour having a particle size of less than 270 µm) for overall liking, appearance (overall, gloss), flavour (overall, sweetness), and mouthfeel (smoothness, creaminess) using a 9-point hedonic scale and participants were asked for preference. The aim of this sensory analysis was to understand the key sensory differences and degree of liking of chocolate analogues comprising oat flour having a specific particle size.

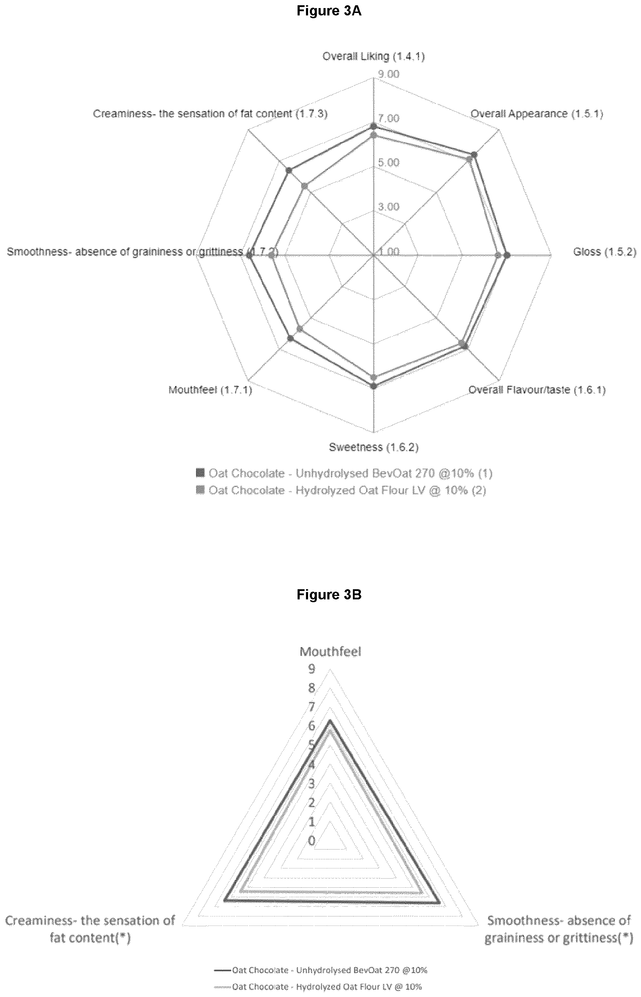

The results of this analysis indicate that a chocolate analogue comprising unhydrolyzed oat flour having a particle size of less than 270 µm rated highly for flavour/taste and appearance with scores in at "like slightly" to "like moderately"; compared to a chocolate analogue comprising hydrolysed oat flour having a particle size of less than 270 µm (see Figure 3A). Overall, a chocolate analogue comprising unhydrolyzed oat flour having a particle size of less than 270 µm rated higher than a chocolate analogue comprising hydrolysed oat flour having a particle size of less than 270 µm for all attributes and was significantly preferred over the other sample (see Figure 3A).

Mouthfeel liking scores (see Figure 3B) indicated the most differences in liking between samples. Overall mouthfeel scores were not significantly different between these two chocolate analogue samples. However, the perception of smoothness and creaminess was significantly different at 95% confidence. Overall, a chocolate analogue comprising unhydrolyzed oat flour having a particle size of less than 270 µm was considered to be smoother and creamier than a chocolate analogue comprising hydrolysed oat flour having a particle size of less than 270 µm.

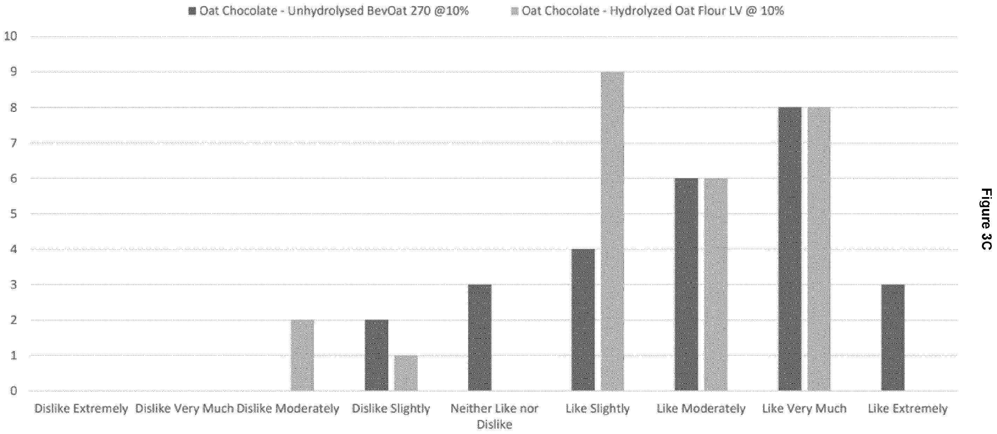

In regards to flavour and taste (sweetness) liking, scores were not significantly different. Both chocolate analogue samples were liked with a chocolate analogue comprising unhydrolyzed oat flour having a particle size of less than 270 µm more highly liked than a chocolate analogue comprising hydrolysed oat flour having a particle size of less than 270 µm across both attributes (see Figure 3C).

## Claims

1. A chocolate analogue comprising:
(a) a flour,
(b) cocoa,
(c) a fat, and
(d) a sweetener.

2. A chocolate analogue according to claim 1, wherein the flour has a particle size of less than 550 µm.

3. A chocolate analogue according to claim 1 or 2, wherein at least 50% of the flour has a particle size distribution of less than 550 µm on a v/v basis.

4. A chocolate analogue according to any one of claims 1-3, wherein the flour has a particle size of less than 270 µm.

5. A chocolate analogue according to any one of claims 1-4, wherein at least 50% of the flour has a particle size distribution of less than 270 µm on a v/v basis.

6. A chocolate analogue according to any one of claims 1-5, wherein the flour is a rice, wheat, rye, oat, barley, millet, or maize flour.

7. A chocolate analogue according to any one of claims 1-6, wherein the chocolate analogue comprises the flour in an amount of about 10 - 20 %(w/w) relative to the weight of the chocolate analogue.

8. A chocolate analogue according to any one of claims 1-7, wherein the cocoa is a cocoa liquor or a cocoa mass.

9. A chocolate analogue according to any one of claims 1-8, wherein the chocolate analogue comprises the cocoa in an amount of 2 - 20 %(w/w) relative to the weight of the chocolate analogue.

10. A chocolate analogue according to any one of claims 1-9, wherein the fat is cocoa butter.

11. A chocolate analogue according to any one of claims 1 -10, wherein the chocolate analogue comprises the fat in an amount of 20 - 60 %(w/w) relative to the weight of the chocolate analogue.

12. A chocolate analogue according to any one of claims 1-11, wherein the sweetener is a refined sucrose.

13. A chocolate analogue according to any one of claims 1-12, wherein the chocolate analogue comprises the sweetener in an amount of 25 - 60 %(w/w) relative to the weight of the chocolate analogue.

14. A method of producing a chocolate analogue according to any one of claims 1-13, the method comprising admixing:
(a) the flour,
(b) the cocoa,
(c) the fat, and
(d) the sweetener.

15. A method according to claim 14, further comprising at least one of: conching the admixed mixture; tempering the admixed mixture; shaping the admixed mixture; and storing the admixed mixture.
